# EUROPEAN PATENT APPLICATION

(11) **EP 4 471 259 A1**
(43) Date of publication of application: **04.12.2024**
(21) Application number: 22922297.1
(22) Date of filing: 17.06.2022
(51) Int. Cl.: F01N 3/08, F01N 3/04, F01N 11/00, B01D 53/78, B01D 53/79, B01D 53/62, B01D 53/14

(54) **CARBON DIOXIDE CAPTURE AND CARBON CAPTURE AND UTILIZATION SYSTEM FOR SHIP, AND METHOD THEREFOR**

(30) Priority: 24.01.2022 KR 20220010026
(71) Applicant: Lowcarbon Co., Ltd., Seongjeon-myeon, Gangjin-gun Jeollanam-do 59205 (KR)
(72) Inventor: LEE, Cheol, Cheongju-si Chungcheongbuk-do 28709 (KR)
(74) Representative: M. Zardi & Co S.A.
(86) International application number: PCT/KR2022/008622
(87) International publication number: WO 2023/140438

(57) **Abstract**

Proposed are a carbon dioxide capture and carbon capture and utilization system for a ship, and a method therefor. The system includes a first reactor configured to receive an exhaust gas, to capture carbon dioxide in the exhaust gas by reacting the exhaust gas with a basic alkaline mixture solution, to collect a reactant containing the captured carbon dioxide, to separate a carbon dioxide reactant and a waste solution from the reactant, to collect and store the carbon dioxide reactant, and to discharge a residual exhaust gas in which the captured carbon dioxide is removed, and includes a second reactor connected to the first reactor, the second reactor being provided with a carbon dioxide reactant injection port and at least two seawater injection ports. The second reactor is a horizontal type reactor, and a turbulent flow zone and a laminar flow zone are sequentially formed in the second reactor.

## Description

### Technical Field

The present disclosure relates to a carbon dioxide capture and carbon capture and utilization system for a ship, and a method therefor. More particularly, the present disclosure relates to a carbon dioxide capture and carbon capture and utilization system for a ship, and a method therefor, the system being configured to capture and convert carbon dioxide in an exhaust gas into a carbon resource by using a basic alkaline mixture solution while considering an environmental restriction condition of a ship different from on land, thereby being capable of removing carbon dioxide in the ship and also capable of utilizing carbon dioxide such that carbon dioxide is converted into other useful materials.

### Background Art

As the number of ships that are one of the means of transportation between countries is increasing exponentially, marine pollution and air pollution caused by oil and exhaust gas discharged from ships are accelerating global warming and destruction of the marine ecosystem.

In addition, in order to respond to climate change agreements, the Marine Environment Protection Committee (MEPC) of the International Maritime Organization (IMO) has required each state party to submit indexing evaluation results reports for six global warming gases including CO₂, CH₄, N₂O, HFC, PFC, and so on according to the Kyoto protocol, so that the need for related research is becoming more prominent even in Korea.

Accordingly, there is a trend of change from existing Heavy Fuel Oil (HFO) and Marine Diesel Oil (MDO) to Liquefied Natural Gas (LNG). However, using LNG as a fuel can satisfy regulations related to NOx and SOx, but it is difficult to satisfy regulations related to carbon dioxide emissions that will be strengthened in the future.

In response, carbon dioxide treatment technologies such as Carbon Capture and Storage (CCS) in which carbon dioxide is captured from combustion gas and injected and stored in an underground place such as ocean, underground, and so on, Enhanced Oil Recovery (EOS) in which oil that remains in underground even after a first recovery or a second recovery is recovered by injecting carbon dioxide, and so on are used in a ship.

However, in order to treat carbon dioxide in an exhaust gas generated from a crude oil carrier ship, carbon dioxide that is generated is required to be captured and transported to the outside, so that there is a disadvantage that the cost is high and there is a disadvantage that a system such as a liquefaction process of carbon dioxide is complicated.

In addition, a carbon dioxide removal apparatus applied to a conventional ship is known to have a low carbon dioxide removal efficiency and have a high treatment cost, and there is a problem that the carbon dioxide removal apparatus is difficult to be mounted and operated on a ship with limited space.

Particularly, in order to treat carbon dioxide discharged from a ship, an environmental restriction condition of the ship is required to be considered, unlike on land. Specifically, when a ship is operated on seawater, the ship is shaking with the flow of seawater, so that uniform contact with gas and liquid may be difficult to be realized. Furthermore, considering that a reactor is used by being mounted on the ship, the reactor is required to be designed on a more compact scale.

Therefore, in consideration of the environmental restriction condition in the ship, there is an urgent need for a method to efficiently reduce carbon dioxide discharged from a ship with a simpler system configuration compared to a conventional technology.

### Disclosure

### Technical Problem

Accordingly, the present disclosure has been made keeping in mind the above problems occurring in the related art, and an objective of the present disclosure is to provide a carbon dioxide capture and carbon capture and utilization system for a ship, and a method therefor, the system being configured to capture and convert carbon dioxide in an exhaust gas into a carbon resource by using a basic alkaline mixture solution while considering an environmental restriction condition of the ship different from on land, thereby being capable of removing carbon dioxide in the ship and also capable of utilizing carbon dioxide such that carbon dioxide is converted into other useful materials.

In addition, another objective of the present disclosure is to provide a carbon dioxide capture and carbon capture and utilization system for a ship, and a method therefor, the system being configured such that carbon dioxide and a basic alkaline mixture solution are reacted with each other in a first reactor and then a generated carbon dioxide reactant and seawater are introduced into a second reactor that is a horizontal type mineralization reactor such that carbonate minerals are generated, thereby being capable of increasing carbonate conversion rate of carbon dioxide in an exhaust gas discharged from the ship while having a more compact scale and maintaining durability of the overall system on the ship.

The technical problems to be solved by the present disclosure are not limited to the above-mentioned problems, and other problems which are not mentioned will be clearly understood by those skilled in the art from the following description.

### Technical Solution

In order to achieve the above objectives, according to an embodiment of the present disclosure, there is provided a carbon dioxide capture and carbon capture and utilization system for a ship, the system including: a first reactor configured to receive an exhaust gas discharged from the ship, to capture carbon dioxide in the exhaust gas by reacting the exhaust gas with a basic alkaline mixture solution, to collect a reactant containing the captured carbon dioxide, to separate a carbon dioxide reactant and a waste solution from the reactant, to collect and store the carbon dioxide reactant, and to discharge a residual exhaust gas in which the captured carbon dioxide is removed; and a second reactor connected to the first reactor, the second reactor being provided with a carbon dioxide reactant injection port into which the carbon dioxide reactant is injected and at least two seawater injection ports symmetrically arranged with respect to a direction in which the carbon dioxide reactant is injected, wherein the second reactor is a horizontal type reactor, and a turbulent flow zone and a laminar flow zone that are formed by seawater introduced with respect to the direction in which the carbon dioxide reactant is injected are sequentially formed in the second reactor.

In addition, seawater introduced inside the second reactor may be introduced in a tangential direction from two directions, thereby generating a tangential flow.

In addition, the turbulent flow zone may be a zone in which carbonate minerals are generated by reacting the carbon dioxide reactant with seawater, and the laminar flow zone may be a zone in which particles of the generated carbonate minerals are grown.

In addition, the first reactor may include: a mixer configured to supply the basic alkaline mixture solution; an absorption tower configured to capture carbon dioxide in the exhaust gas by reacting the basic alkaline mixture solution supplied from the mixer with the exhaust gas in which micro bubbles are formed by passing through a bubbler formed on a lower portion of the absorption tower; a separator configured to collect the reactant containing carbon dioxide captured in the absorption tower and to separate the carbon dioxide reactant and the waster solution from the reactant; a carbon resource storage unit storing the separated carbon dioxide reactant for utilizing the carbon dioxide reactant; and a discharge part configured to discharge the residual exhaust gas in which carbon dioxide captured in the absorption tower is removed.

In addition, the mixer may be configured to generate the basic alkaline mixture solution by mixing a basic alkaline solution supplied from a basic alkaline solution storage with water supplied from a water supply source.

In addition, the basic alkaline solution and the water may be mixed in a ratio of 1:1 to 1:5.

In addition, an average pH of the basic alkaline mixture solution may be pH 12 to pH 13.5.

In addition, the basic alkaline mixture solution may include: at least one oxide selected from a group consisting of SiO₂, Al₂O₃, Fe₂O₃, TiO₂, MgO, MnO, CaO, Na₂O, K₂O, and P₂O₃; at least one metal selected from a group consisting of Li, Cr, Co, Ni, Cu, Zn, Ga, Sr, Cd, and Pb; and at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

In addition, the absorption tower may be configured to supply the basic alkaline mixture solution from the mixer by using a plurality of nozzles mounted on an upper portion of the absorption tower.

In addition, the basic alkaline mixture solution may be input by being adjusted through a valve in the mixer when a level of the basic alkaline mixture solution in the absorption tower is lowered to less than 90%, and inputting of the basic alkaline mixture solution may be stopped and, at the same time, the basic alkaline solution and water may be mixed until a pH of the basic alkaline mixture solution becomes pH 12 to pH 13.5 when the level of the basic alkaline mixture solution becomes 100%.

In addition, the bubbler may be configured to form exhaust gas micro bubbles by using the exhaust gas.

In addition, the absorption tower may include a body formed in a cylindrical shape, a motor, a rotary shaft rotated by the motor, and a rotation wing operatively connected to the rotary shaft, the rotary shaft and the rotation wing may be positioned inside the body, a plurality of nozzles capable of spraying the basic alkaline mixture solution in a form of bubbles may be formed on the rotation wing in a longitudinal direction by being spaced apart from each other at a predetermined distance, the basic alkaline mixture solution supplied from the mixer may be introduced into the rotary shaft, the basic alkaline mixture solution that is introduced may be sprayed inside the body having the cylindrical shape through the plurality of nozzles.

In addition, the absorption tower may further include a sparger having a plurality of exhaust gas outlets through which the exhaust gas is discharged, and a diameter of the plurality of exhaust gas outlets may be 2 *µ*m to 50 *µ*m.

In addition, the first reactor may further include: a monitoring part configured to monitor a level and a pH of the basic alkaline mixture solution in the absorption tower; and a control part configured to adjust a supply amount of the basic alkaline mixture solution by the monitoring part.

In addition, the carbon dioxide reactant may include sodium carbonate (Na₂CO₃) or sodium bicarbonate (NaHCO₃).

In order to achieve the above objectives, according to an embodiment of the present disclosure, there is provided a method for a carbon dioxide capture and carbon capture and utilization system for a ship, the method including: generating, by a first reactor, a carbon dioxide reactant by receiving an exhaust gas discharged from the ship and by reacting the exhaust gas with a basic alkaline mixture solution so that carbon dioxide in the exhaust gas is captured; and providing, by a second reactor, carbonate minerals by introducing the carbon dioxide reactant generated in the first reactor and seawater and by reacting the carbon dioxide reactant with seawater, wherein the second reactor is a horizontal type reactor, and a turbulent flow zone and a laminar flow zone that are formed by seawater introduced with respect to a direction in which the carbon dioxide reactant is injected are sequentially formed in the second reactor.

In addition, the carbon dioxide reactant may include sodium carbonate (Na₂CO₃) or sodium bicarbonate (NaHCO₃).

In addition, the generating, by the first reactor, the carbon dioxide reactant by receiving the exhaust gas discharged from the ship and by reacting the exhaust gas with the basic alkaline mixture solution so that carbon dioxide in the exhaust gas is captured may include collecting carbon dioxide in the exhaust gas by reacting the exhaust gas discharged from the ship with the basic alkaline mixture solution generated by mixing a basic alkaline solution supplied from a basic alkaline solution storage with water supplied from a water supply source in a ratio of 1:1 to 1:5.

In addition, an average pH of the basic alkaline mixture solution may be pH 12 to pH 13.5.

In addition, the basic alkaline mixture solution may include: at least one oxide selected from a group consisting of SiO₂, Al₂O₃, Fe₂O₃, TiO₂, MgO, MnO, CaO, Na₂O, K₂O, and P₂O₃; at least one metal selected from a group consisting of Li, Cr, Co, Ni, Cu, Zn, Ga, Sr, Cd, and Pb; and at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

In addition, the first reactor may include: a mixer configured to supply the basic alkaline mixture solution; an absorption tower configured to capture carbon dioxide in the exhaust gas by reacting the basic alkaline mixture solution supplied from the mixer with the exhaust gas in which micro bubbles are formed by passing through a bubbler formed on a lower portion of the absorption tower; a separator configured to collect a reactant containing carbon dioxide captured in the absorption tower and to separate the carbon dioxide reactant and a waster solution from the reactant; a carbon resource storage unit storing the separated carbon dioxide reactant for utilizing the carbon dioxide reactant; and a discharge part configured to discharge a residual exhaust gas in which carbon dioxide captured in the absorption tower is removed.

In addition, the generating, by the first reactor, the carbon dioxide reactant by receiving the exhaust gas discharged from the ship and by reacting the exhaust gas with the basic alkaline mixture solution so that carbon dioxide in the exhaust gas is captured may include inputting the basic alkaline mixture solution by being adjusted through a valve in the mixer when a level of the basic alkaline mixture solution in the absorption tower is lowered to less than 90%, and stopping the inputting of the basic alkaline mixture solution and, at the same time, mixing the basic alkaline solution with water until a pH of the basic alkaline mixture solution becomes pH 12 to pH 13.5 when the level of the basic alkaline mixture solution becomes 100%.

In addition, in the providing, by the second reactor, carbonate minerals by introducing the carbon dioxide reactant generated in the first reactor and seawater and by reacting the carbon dioxide reactant with seawater, the second reactor may be horizontally arranged, and seawater introduced inside the second reactor may be introduced in a tangential direction from two directions, thereby generating a tangential flow.

In addition, the turbulent flow zone may be a zone in which carbonate minerals are generated by reacting the carbon dioxide reactant with seawater, and the laminar flow zone may be a zone in which particles of the generated carbonate minerals are grown.

### Advantageous Effects

According to embodiments of the present disclosure, the following effects may be realized. However, the embodiments may not include all these effects, and the claim scope of the present disclosure is not construed as being limited thereto.

According to an embodiment of the present disclosure, since carbon dioxide in the exhaust gas is captured and converted into the carbon resource by using the basic alkaline mixture solution while considering the environmental restriction condition of the ship different from on land, carbon dioxide in the ship is capable of being removed and also carbon dioxide is capable of being utilized such that carbon dioxide is converted into other useful materials such as sodium carbonate or sodium bicarbonate.

In addition, according to an embodiment of the present disclosure, after carbon dioxide and the basic alkaline mixture solution are reacted with each other in the first reactor, sodium carbonate or sodium bicarbonate that is a generated carbon dioxide reactant is introduced into the second reactor together with seawater such that carbonate minerals are generated, so that carbonate conversion rate of carbon dioxide in an exhaust gas discharged from the ship may be increased while having a more compact scale and maintaining durability of the overall system on the ship.

As described above, according to an embodiment of the present disclosure, the present disclosure contributes to the reduction of greenhouse gases, and manufactures carbonate utilized in various industrial fields such as food additives, detergents, soap raw materials, high-tech medical industries, wastewater treatment, and so on, so that a profit-generating effect may also be expected.

### Description of Drawings

FIG. 1 is a conceptual view illustrating a carbon dioxide capture and carbon capture and utilization system for a ship according to an embodiment of the present disclosure.
FIG. 2 is a view illustrating a first reactor according to an embodiment of the present disclosure.
FIG. 3 is a view schematically illustrating a configuration of an absorption tower for improving a carbon dioxide capture performance of the first reactor according to an embodiment of the present disclosure.
FIG. 4 is a view illustrating a second reactor according to an embodiment of the present disclosure.

### Mode for Invention

Since the present disclosure may be variously modified and have several exemplary embodiments, specific exemplary embodiments will be shown in the accompanying drawings and be described in detail in a detailed description.

However, it should be understood that the specific embodiments according to the concept of the present disclosure are not limited to the embodiments which will be described hereinbelow with reference to the accompanying drawings, but all of modifications, equivalents, and substitutions are included in the scope and spirit of the present disclosure.

It is to be understood that terms such as "including", "having", and so on are intended to indicate the existence of the features, numbers, steps, actions, elements, components, or combinations thereof disclosed in the specification, and are not intended to preclude the possibility that one or more other features, numbers, steps, actions, elements, components, or combinations thereof may exist or may be added.

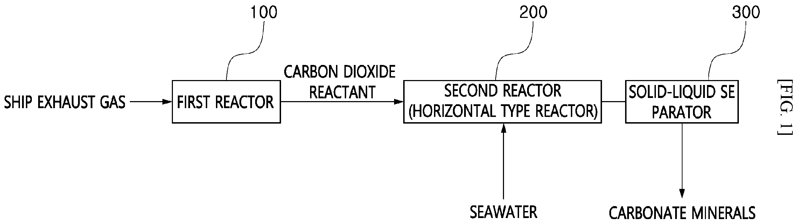

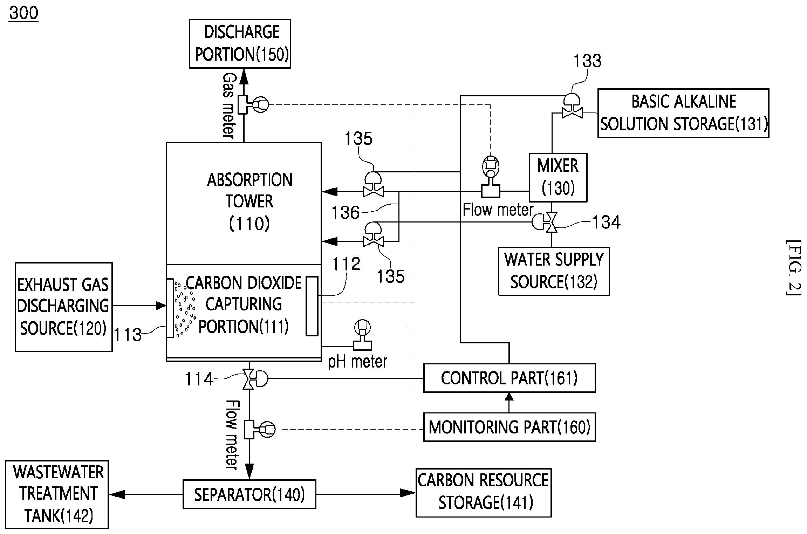

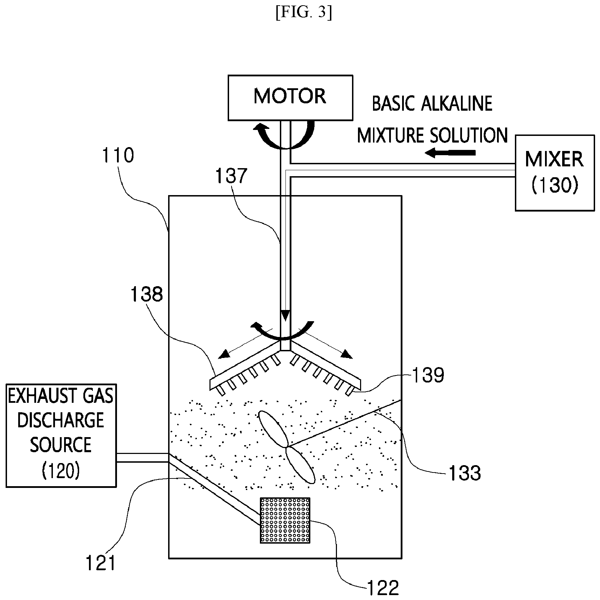

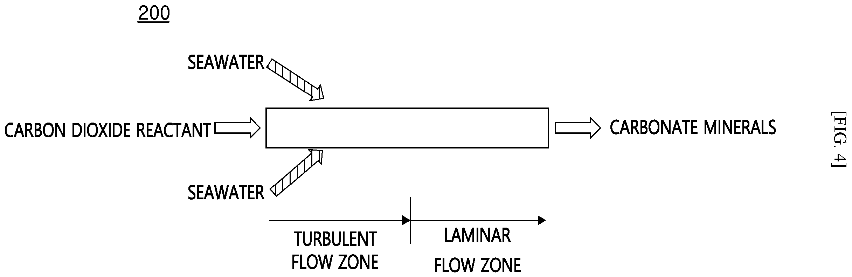

FIG. 1 is a conceptual view illustrating a carbon dioxide capture and carbon capture and utilization system for a ship according to an embodiment of the present disclosure, FIG. 2 is a view illustrating a first reactor according to an embodiment of the present disclosure, FIG. 3 is a view schematically illustrating a configuration of an absorption tower for improving a carbon dioxide capture performance of the first reactor according to an embodiment of the present disclosure, and FIG. 4 is a view illustrating a second reactor according to an embodiment of the present disclosure.

The carbon dioxide capture and carbon capture and utilization system for the ship according to an embodiment of the present disclosure will be described in more detail with reference to the following drawings.

Referring to FIG. 1, a carbon dioxide capture and carbon capture and utilization system for a ship according to an embodiment of the present disclosure is a system configured to use carbon dioxide in an exhaust gas generated from a boiler, an incinerator, or an engine of a ship such that a carbon dioxide reactant containing sodium carbonate (Na₂CO₃) or sodium bicarbonate (NaHCO₃) that is a useful material is generated, the system being capable of increasing generation efficiency of carbonate minerals through a reaction between the carbon dioxide reactant and seawater. Furthermore, the system may include a first reactor 100 and a second reactor 200 which preferably is a horizontal type mineralization reactor, and may optionally include a solid-liquid separator 300.

In the first reactor 100, the first reactor 100 may receive an exhaust gas discharged from a ship and may capture carbon dioxide in the exhaust gas by reacting the exhaust gas with a basic alkaline mixture solution, may collect a reactant containing the captured carbon dioxide, may separate a carbon dioxide reactant and a waste solution from the reactant, may collect and store the carbon dioxide reactant, and may discharge a residual exhaust gas in which the captured carbon dioxide is removed. Here, the carbon dioxide reactant may include sodium carbonate (Na₂CO₃) or sodium bicarbonate (NaHCO₃).

Then, the carbon dioxide reactant is introduced into the second reactor 200 which is the horizontal type mineralization reactor, and seawater is introduced into the second reactor 200, so that carbonate minerals may be formed by a reaction between cations in the seawater and the carbon dioxide reactant.

The carbonate minerals formed in the second reactor 200 may be separated by the solid-liquid separator. Here, the solid-liquid separator may be configured to perform the separation by using a centrifugal separation method.

FIG. 2 is a view illustrating the first reactor according to an embodiment of the present disclosure.

Referring to FIG. 2, the first reactor 100 according to an embodiment of the present disclosure may have a structure capable of reducing carbon dioxide by capturing carbon dioxide in an exhaust gas discharged from a ship and capable of performing carbon utilization by using the captured carbon dioxide such that the captured carbon dioxide is converted into sodium carbonate or sodium bicarbonate.

Specifically, the first reactor 100 according to an embodiment of the present disclosure is a reactor configured to capture carbon dioxide in an exhaust gas by using a basic alkaline solution, the exhaust gas being discharged from a ship. Furthermore, the first reactor 100 includes an absorption tower 110, a carbon dioxide capture part 111, an exhaust gas discharge source 120, a mixer 130, a separator 140, a carbon resource storage unit 141, and a discharge part 150.

The absorption tower 110 may refer to a facility, a building, an equipment, and so on capturing carbon dioxide. In addition, the carbon dioxide capture part 111 positioned on a lower end of the absorption tower 110 is a portion of the absorption tower 110, and may refer to a portion that captures carbon dioxide by bubbling the exhaust gas.

The absorption tower 110 includes the carbon dioxide capture part 111 at the lower end of the absorption tower 110, and is configured to capture only carbon dioxide in the exhaust gas by reacting the basic alkaline mixture solution with the exhaust gas (micro bubbles of the exhaust gas), the exhaust gas being discharged from the ship. After carbon dioxide in the exhaust gas is captured, the exhaust gas in which carbon dioxide is removed may remain in a gaseous state in the absorption tower 110.

A nozzle is mounted on an upper portion of the absorption tower 110, the basic alkaline mixture solution is sprayed inside the absorption tower 110 through the nozzle, and the basic alkaline mixture solution is collected in the carbon dioxide capture part 111 positioned at the lower end of the absorption tower 110. At the same time as the basic alkaline mixture solution is sprayed, the exhaust gas supplied from the exhaust gas discharge source 120 passes through a bubbler 113 in the carbon dioxide capture part 111 at the lower portion of the absorption tower 110, the exhaust gas in which micro bubbles are formed is supplied, and the basic alkaline mixture solution and the micro bubbles of the exhaust gas react with each other within the carbon dioxide capture part 111, so that carbon dioxide is captured. When the exhaust gas reacts with the basic alkaline mixture solution, the micro bubbles are formed while the exhaust gas passes through the bubbler 113having fine holes formed on an outlet of the exhaust gas discharge source 120.

As the exhaust gas supplied from the exhaust gas discharge source 120 passes through the bubbler 113, the bubbler 113 may form the micro bubbles in the exhaust gas. Furthermore, the smaller the size of the micro bubbles, the larger the reaction area of the exhaust gas and the alkaline solution, so that the carbon dioxide capture ability may be increased. For example, the micro bubbles may refer to bubbles which have a size about equal to or less than 50 *µ*m and which exist in an aqueous solution.

In addition to the bubbler 113, as illustrated in FIG. 3, the absorption tower 110 may be provided with a sparger 122 having a plurality of exhaust gas outlets through which the exhaust gas is discharged, and a diameter of the plurality of exhaust gas outlets is 2 *µ*m to 50 *µ*m.

In addition, the absorption tower 110 may include a level indicator inside the absorption tower 110, so that a level of a solution in the absorption tower 110 is capable of being detected.

The nozzle may include a plurality of nozzles, and may be formed of at least one stage. The nozzle is connected to the mixer 130, and may supply the basic alkaline mixture solution from the mixer 130.

The absorption tower 110 may be configured in series, in parallel, or in a series and parallel complex arrangement.

For example, the absorption tower 110 may be arranged in series when the flow velocity of the exhaust gas is high. When carbon dioxide unreacted due to a high flow velocity is discharged from the absorption tower, the absorption tower may be mounted in series so as to capture the unreacted carbon dioxide.

In addition, for example, the absorption tower 110 may be arranged in parallel when the flow rate of the exhaust gas is large. When the flow rate of the exhaust gas exceeds the amount that the absorption tower can capture, the amount of carbon dioxide that can be captured may be increased by arranging the absorption tower in parallel.

The exhaust gas discharge source 120 may utilize all gases that discharge carbon dioxide. According to an embodiment of the present disclosure, the exhaust gas may be an exhaust gas discharged from a boiler, an incinerator, or an engine of a ship.

The mixer 130 mixes a basic alkaline solution supplied from a basic alkaline solution storage 131 with water supplied from a water supply source 132, and supplies the mixture to the nozzle of the absorption tower 110.

The basic alkaline mixture solution in which the basic alkaline solution and the water are mixed with each other may be supplied by using a separately connected by-pass line 136 when a supply amount or a required amount of the basic alkaline mixture solution is increased.

The basic alkaline solution and the water may be mixed in a ratio of 1:1 to 1:5. For example, the basic alkaline solution and the water may be mixed in a ratio of 1:1 to 1:4, 1:1 to 1:3, 1:1 to 1:2, 1:2 to 1:5, 1:2 to 1:3, or 1:3 to 1:5.

A carbon dioxide capture rate may be increased as the basic alkaline mixture solution mixing ratio of the basic alkaline solution and the water is increased, but the mixing ratio of the water may be adjusted in consideration of the cost aspect.

The basic alkaline mixture solution includes: at least one oxide selected from a group consisting of SiO₂, Al₂O₃, Fe₂O₃, TiO₂, MgO, MnO, CaO, Na₂O, K₂O, and P₂O₃; at least one metal selected from a group consisting of Li, Cr, Co, Ni, Cu, Zn, Ga, Sr, Cd, and Pb; and at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

The water supply source 132 may include all water that may be easily acquired at a system installation site and may be, for example, seawater.

An average pH of the basic alkaline mixture solution may be at least pH 12. For example, the pH may be pH 12 to pH 13.5, pH 12, pH 12.1, pH 12.2, or pH 12.3. The pH of the basic alkaline mixture solution may be measured by a pH meter in the absorption tower 110, and carbon dioxide cannot be captured anymore when the pH of the basic alkaline mixture solution in the absorption tower 110 is less than pH 10.5. Therefore, in order to adjust the pH of the basic alkaline mixture solution, the amount of the basic alkaline solution and the amount of water may be adjusted from zero to 100% by each valve 133 and 134 and the basic alkaline solution and the water may be supplied to the mixer 130.

When the level of the basic alkaline mixture solution in the absorption tower 110 is lower than 90% (measured by the level indicator), the input may be adjusted through the valve 135 at the mixer 130 so that the basic alkaline mixture solution is input. Furthermore, when the level of the solution reaches 100%, the input of the solution may be stopped. At the same time, the basic alkaline solution and the water may be mixed until the pH of the basic alkaline mixture solution becomes pH 12 to pH 13.5.

Since the amount of basic alkaline mixture solution supplied to the absorption tower 110 and the amount of the solution discharged from the separator 140 are the same, a carbon dioxide capturing system is capable of being continuously maintained. Therefore, the valve (including a by-pass valve if necessary) 135 is adjusted so that the same amount of the basic alkaline mixture solution as a value of a flow meter mounted in the line from the absorption tower 110 to the separator 140 is supplied to the absorption tower 110, thereby making the net flow to zero.

The reactant containing carbon dioxide captured by reacting the basic alkaline mixture solution and the exhaust gas with each other is collected in the carbon dioxide capture part 111 of the absorption tower 110, the carbon dioxide reactant and the waste solution from the reactant are moved to the separator 140 through a valve 114, and the carbon dioxide reactant and the waste solution are separated from the reactant. For example, the separator 140 may be configured to perform the separation by using a centrifugal separation method.

The separated carbon dioxide reactant may be moved to the carbon resource storage unit 141 and the second reactor 200, or may be collected and directly moved to the second reactor 200 and may react with seawater in the second reactor 200. Here, the carbon dioxide reactant may include sodium carbonate (Na₂CO₃) or sodium bicarbonate (NaHCO₃).

As described in Formula 1 below, the carbon dioxide reactant may be formed by reacting the basic alkaline mixture solution with carbon dioxide.

<Formula 1> 2NaOH + CO₂ → Na₂CO₃ + H₂O Na₂CO₃ + H₂O + CO₂ → 2NaHCO₃

In the reactant, the waste solution other than the carbon dioxide reactant is moved to a wastewater treatment tank 142 and then is discarded. For example, the waste solution may include illite minerals, water, and so on that are contained in the basic alkaline mixture solution that has finished a catalyst function.

The residual exhaust gas in which carbon dioxide is removed after carbon dioxide is captured in the carbon dioxide capture part 111 is discharged through the discharge part 150. For example, the residual exhaust gas discharged through the discharge part 150 may include the exhaust gas in which carbon dioxide is removed and may include some small amounts of uncaptured carbon dioxide.

At this time, since the concentration of carbon dioxide cannot exceed the regulatory standard value when the residual exhaust gas is discharged, the residual exhaust gas that does not exceed a standard (the standard set by a manager after the concentration of carbon dioxide in the atmosphere is measured) may be discharged on the basis of the concentration of carbon dioxide in the atmosphere to which the residual exhaust gas is discharged.

The first reactor 100 may further include: a monitoring part 160 configured to monitor a level and a pH of the basic alkaline mixture solution in the absorption tower; and a control part 161 configured to adjust a supply amount of the basic alkaline mixture solution by the monitoring part 160.

Values of a gas meter, a pH meter, and a flow meter measured in all processes of the first reactor 100 are managed in the monitoring part 160, and the control part 161 performs adjustment on the basis of the values represented by the monitoring part 160. The valves 114, 133, 134, and 135 may be adjusted in percentage with respect to values input from the control part 161.

Meanwhile, FIG. 3 is a view schematically illustrating a configuration of the absorption tower 110 for improving a carbon dioxide capture performance of the first reactor 100 according to an embodiment of the present disclosure.

Referring to FIG. 3, in the configuration of the absorption tower 110 according to an embodiment of the present disclosure, the absorption tower 110 includes a reactor body formed in a cylindrical shape, a motor M, a rotary shaft 137, and a rotation wing 138 that is operatively connected to the rotary shaft 137. Furthermore, the rotary shaft 137 and the rotation wing 138 are positioned inside the reactor body, the rotation wing 138 is formed such that a plurality of nozzles 139 through which the basic alkaline mixture solution is capable of being sprayed in the form of bubbles is formed in a longitudinal direction by being spaced apart from each other at a predetermined distance, the basic alkaline mixture solution supplied from the mixer 130 is introduced into the rotary shaft 137, and the basic alkaline mixture solution introduced accordingly is sprayed inside the reactor body having the cylindrical shape through the plurality of nozzles 139.

Specifically, according to an embodiment of the present disclosure, the rotation wing 138 is operatively connected to the rotary shaft 137. That is, as the rotary shaft 137 of the motor M is rotated, the rotation wing 138 for stirring is rotated simultaneously, so that the basic alkaline mixture solution inside the absorption tower 110 is capable of being stirred.

In addition, the plurality of nozzles 139 formed on the rotating wing 138 is configured to generate fine bubbles (bubbles having a diameter of several hundred micrometers to several micrometers). Therefore, as the rotary shaft 137 is rotated, the rotation wing 138 for stirring is rotated simultaneously, so that the basic alkaline mixture solution is capable of being more finely sprayed inside the absorption tower 110.

In addition, an exhaust gas inlet pipe 121 connected to the exhaust gas discharge source 120 may be mounted on the lower portion of the absorption tower 110 so that the exhaust gas generated from the ship is discharged into the absorption tower 110, and a first end of the exhaust gas inlet pipe 121 positioned in the absorption tower 100 may be configured such that the sparger 122 is coupled to the first end of the exhaust gas inlet pipe 121.

The plurality of exhaust gas outlets through which the exhaust gas generated from the ship is discharged is formed in the sparger 122, so that the exhaust gas generated from the ship and the basic alkaline mixture solution finely sprayed through the plurality of nozzles 139 formed on the rotation wing 138 smoothly react with each other. Such a sparger 122 is formed in a cylindrical shape, and the plurality of exhaust gas outlets which is finely formed and through which a mixed gas is discharged is formed in an outer circumference of the sparger 122. At this time, the smaller the size of the exhaust gas outlets, the less dispersed the input exhaust gas becomes, so that the reaction efficiency of the exhaust gas with the basic alkaline mixture increases. However, there is a problem that a differential pressure is also increased, so that an appropriate sparger suitable for a gas flow rate is required to be selected. Preferably, a diameter of the exhaust gas outlet is 2 *µ*m to 50 *µ*m. This is because, the differential pressure increases significantly when the diameter of the exhaust gas outlet is less than 2 *µ*m, and the reaction efficiency of the mixed gas and an absorbent decreases when the diameter of the exhaust gas outlet exceeds 50 *µ*m.

According to the configuration of the absorption tower 110 described above, the first reactor 100 according to the present disclosure may increase the capture efficiency according to capture of carbon dioxide in the exhaust gas discharged from the ship, and may increase the production efficiency of sodium carbonate or sodium bicarbonate by using the captured carbon dioxide.

Meanwhile, the first reactor 100 described above may solve a disadvantage that may occur in generating carbonate ions or bicarbonate ions in a conventional seawater electrolysis reactor. For example, in a conventional seawater electrolysis reaction, due to an electrodeposition phenomenon of a scale (Mg(OH)₂, Ca(OH)₂, and so on) that is generated on a surface of a negative electrode, a reaction resistance between electrodes is increased in the continuous electrolysis reaction, and the consumption of the current to maintain the concentration of a residual oxidizer increases, so that there is a problem of shortening the normal operation life of an electrolyzer, which causes a disadvantage of causing a problem with the durability of the entire system. On the other hand, once the first reactor 100 is mounted, the first reactor 100 is capable of continuously maintaining durability with requiring little need for replacement or maintenance, and may remove carbon dioxide from the ship and may also manufacture sodium carbonate or sodium bicarbonate which is a useful material.

In addition, according to an embodiment of the present disclosure, sodium carbonate or sodium bicarbonate generated from the first reactor 100 is introduced into the second reactor 200 that is the horizontal type mineralization reactor, and seawater is introduced into the second reactor 200, so that the second reactor 200 may form carbonate minerals by the reaction between cations in seawater and the carbon dioxide reactant. For a detailed description, the second reactor 200 will be described with reference to FIG. 4.

FIG. 4 is a view illustrating the second reactor according to an embodiment of the present disclosure.

Referring to FIG. 4, the second reactor 200 according to an embodiment of the present disclosure is the horizontal type reactor. The second reactor 200 is provided with a carbon dioxide reactant injection port which is connected to the first reactor 100 and into which the carbon dioxide reactant is injected from the first reactor 100, and is provided with at least two seawater injection ports that are symmetrically arranged with respect to a direction in which the carbon dioxide reactant is injected.

In the second reactor 200, a turbulent flow zone and a laminar flow zone that are formed by seawater introduced with respect to the direction in which the carbon dioxide reactant generated from the first reactor 100 is injected may be sequentially formed.

When sodium carbonate or sodium bicarbonate is introduced through the carbon dioxide reactant injection port of the second reactor 200 and seawater is introduced through the seawater injection ports, metal cations such as sodium ions (Na⁺) and calcium ions (Ca²⁺) that are dissolved in a large amount in a form of ions in seawater react with carbonate ions or bicarbonate ions which is anions of sodium carbonate or sodium bicarbonate as shown in Formula 2 below, so that carbonate minerals are generated.

<Formula 2> HCO₃⁻ + Ca²⁺ → CaCO₃ + H⁺ or CO₃²⁻ + Ca²⁺ → CaCO₃ HCO₃²⁻ + Na⁺ → NaCO₃ + H⁺ or CO₃⁺ + Na⁺ → NaCO₃

Carbonate minerals generated in the second reactor 200 may be calcium carbonate (CaCO₃), sodium carbonate (NaCO₃), and so on, and may be a mixture thereof. The type of generated carbonate minerals may vary according to the type of cations contained in seawater. Generally, when seawater is used, calcium carbonate (CaCO₃) and sodium carbonate (NaCO₃) may be mainly generated.

Seawater introduced into the second reactor 200 may be introduced in a tangential direction from two directions, thereby generating a tangential flow. By inputting seawater in the tangential direction, a reaction time between carbonate anions or bicarbonate anions and metal cations in seawater may be increased, so that the generation efficiency of carbonate minerals may be increased.

In addition, the turbulent flow zone in the second reactor 200 is a zone in which the tangential flow by seawater that is introduced is generated, and is a zone in which carbonate minerals are generated by reacting carbonate anions or bicarbonate anions with metal cations in seawater. Then, as the tangential flow by the introduced seawater is stabilized, the laminar flow zone is formed adjacent to a particle recovery zone in the mineralization reactor.

Preferably, the laminar flow zone is a zone in which particles of generated carbonate minerals are grown, and particles of the carbonate minerals may grow more uniformly and larger within the laminar flow zone where a flow layer of stabilized reactants is formed.

As described above, since sodium carbonate or sodium bicarbonate generated in the first reactor 100 is introduced into the second reactor 200, the carbonate ions or bicarbonate ions, which are anions of sodium carbonate or sodium bicarbonate, are reacted with metal cations of seawater, and the reactants pass through the turbulent flow zone and the laminar flow zone in the second reactor 200, so that there is an advantage that the conversion rate of carbon dioxide in the exhaust gas discharged from the ship may be increased.

In addition, by forming a uniform and efficient stirring condition through a horizontal arrangement even in an environment in which a ship is shaking, the second reactor 200 may increase the generation efficiency of carbonate minerals and may also be mounted in a narrow space on the ship. Particularly, the second reactor 200 is capable of being stacked in two or more units, so that the second reactor 200 may be built as a compact facility and has an advantage of being modularized.

Although embodiments of the present disclosure have been described for illustrative purposes, those skilled in the art will appreciate that various modifications, additions and substitutions are possible, without changing the spirit or essential features of the present disclosure. Therefore, it should be understood that the embodiments described above are illustrative in all aspects and not restrictive. The scope of the present specification is characterized by the appended claims rather than the detailed description described above, and it should be construed that all alterations or modifications derived from the meaning and scope of the appended claims and the equivalents thereof fall within the scope of the present specification.

Meanwhile, the exemplary embodiments of the present specification are disclosed in the present specification and the drawings, and specific terms are used, but the specific terms are used as general meanings merely for easily explaining the technical contents of the present specification and helping understand the present disclosure, but not intended to limit the scope of the present specification. It is obvious to those skilled in the art to which the present specification pertains that other modified embodiments may be carried out on the basis of the technical spirit of the present specification in addition to the exemplary embodiments disclosed herein.

### Industrial Applicability

The present disclosure may provide a carbon dioxide capture and carbon capture and utilization system for a ship, and a method therefor, the system having a simple configuration compared to a conventional technology and considering an environmental restriction condition on the ship, and the system being capable of efficiently reducing carbon dioxide discharged from the ship and also capable of utilizing carbon dioxide such that carbon dioxide is converted into other useful materials.

Specifically, in the carbon dioxide capture and carbon capture and utilization system for the ship according to the present disclosure, after carbon dioxide and a basic alkaline mixture solution are reacted with each other in a first reactor, a generated carbon dioxide reactant and seawater are introduced into a second reactor that is a horizontal type mineralization reactor such that carbonate minerals are generated, so that carbonate conversion rate of carbon dioxide in an exhaust gas discharged from the ship may be increased while having a more compact scale and maintaining durability of the overall system on the ship

Unlike on land, the present disclosure has a sufficient possibility for marketing or sales of the carbon dioxide capture and carbon capture and utilization system for the ship for shipping companies that need to simultaneously consider environmental constraints and enhanced reduction of carbon dioxide emissions, and is also feasible to the extent that the present disclosure is capable of being clearly realized in reality, so that the present disclosure has industrial applicability.

## Claims

1. A carbon dioxide capture and carbon capture and utilization system for a ship, the system comprising:
a first reactor configured to receive an exhaust gas discharged from the ship, to capture carbon dioxide in the exhaust gas by reacting the exhaust gas with a basic alkaline mixture solution, to collect a reactant containing the captured carbon dioxide, to separate a carbon dioxide reactant and a waste solution from the reactant, to collect and store the carbon dioxide reactant, and to discharge a residual exhaust gas in which the captured carbon dioxide is removed; and
a second reactor connected to the first reactor, the second reactor being provided with a carbon dioxide reactant injection port into which the carbon dioxide reactant is injected and at least two seawater injection ports symmetrically arranged with respect to a direction in which the carbon dioxide reactant is injected,
wherein the second reactor is a horizontal type reactor, and a turbulent flow zone and a laminar flow zone that are formed by seawater introduced with respect to the direction in which the carbon dioxide reactant is injected are sequentially formed in the second reactor.

2. The system of claim 1, wherein seawater introduced inside the second reactor is introduced in a tangential direction from two directions, thereby generating a tangential flow.

3. The system of claim 1, wherein the turbulent flow zone is a zone in which carbonate minerals are generated by reacting the carbon dioxide reactant with seawater, and the laminar flow zone is a zone in which particles of the generated carbonate minerals are grown.

4. The system of claim 1, wherein the first reactor comprises:
a mixer configured to supply the basic alkaline mixture solution;
an absorption tower configured to capture carbon dioxide in the exhaust gas by reacting the basic alkaline mixture solution supplied from the mixer with the exhaust gas in which micro bubbles are formed by passing through a bubbler formed on a lower portion of the absorption tower;
a separator configured to collect the reactant containing carbon dioxide captured in the absorption tower and to separate the carbon dioxide reactant and the waster solution from the reactant;
a carbon resource storage unit storing the separated carbon dioxide reactant for utilizing the carbon dioxide reactant; and
a discharge part configured to discharge the residual exhaust gas in which carbon dioxide captured in the absorption tower is removed.

5. The system of claim 4, wherein the mixer is configured to generate the basic alkaline mixture solution by mixing a basic alkaline solution supplied from a basic alkaline solution storage with water supplied from a water supply source.

6. The system of claim 5, wherein the basic alkaline solution and the water are mixed in a ratio of 1:1 to 1:5.

7. The system of claim 1, wherein an average pH of the basic alkaline mixture solution is pH 12 to pH 13.5.

8. The system of claim 1, wherein the basic alkaline mixture solution comprises:
at least one oxide selected from a group consisting of SiO₂, Al₂O₃, Fe₂O₃, TiO₂, MgO, MnO, CaO, Na₂O, K₂O, and P₂O₃;
at least one metal selected from a group consisting of Li, Cr, Co, Ni, Cu, Zn, Ga, Sr, Cd, and Pb; and
at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

9. The system of claim 4, wherein the absorption tower is configured to supply the basic alkaline mixture solution from the mixer by using a plurality of nozzles mounted on an upper portion of the absorption tower.

10. The system of claim 4, wherein the basic alkaline mixture solution is input by being adjusted through a valve in the mixer when a level of the basic alkaline mixture solution in the absorption tower is lowered to less than 90%, and inputting of the basic alkaline mixture solution is stopped and, at the same time, the basic alkaline solution and water are mixed until a pH of the basic alkaline mixture solution becomes pH 12 to pH 13.5 when the level of the basic alkaline mixture solution becomes 100%.

11. The system of claim 4, wherein the bubbler is configured to form exhaust gas micro bubbles by using the exhaust gas.

12. The system of claim 4, wherein the absorption tower comprises a body formed in a cylindrical shape, a motor, a rotary shaft rotated by the motor, and a rotation wing operatively connected to the rotary shaft,
the rotary shaft and the rotation wing are positioned inside the body,
a plurality of nozzles capable of spraying the basic alkaline mixture solution in a form of bubbles is formed on the rotation wing in a longitudinal direction by being spaced apart from each other at a predetermined distance, and
the basic alkaline mixture solution supplied from the mixer is introduced into the rotary shaft, and the basic alkaline mixture solution that is introduced is sprayed inside the body having the cylindrical shape through the plurality of nozzles.

13. The system of claim 10, wherein the absorption tower further comprises a sparger having a plurality of exhaust gas outlets through which the exhaust gas is discharged, and a diameter of the plurality of exhaust gas outlets is 2 *µ*m to 50 *µ*m.

14. The system of claim 4, wherein the first reactor further comprises:
a monitoring part configured to monitor a level and a pH of the basic alkaline mixture solution in the absorption tower; and
a control part configured to adjust a supply amount of the basic alkaline mixture solution by the monitoring part.

15. The system of claim 1, wherein the carbon dioxide reactant comprises sodium carbonate (Na₂CO₃) or sodium bicarbonate (NaHCO₃).

16. A method for a carbon dioxide capture and carbon capture and utilization system for a ship, the method comprising:
generating, by a first reactor, a carbon dioxide reactant by receiving an exhaust gas discharged from the ship and by reacting the exhaust gas with a basic alkaline mixture solution so that carbon dioxide in the exhaust gas is captured; and
providing, by a second reactor, carbonate minerals by introducing the carbon dioxide reactant generated in the first reactor and seawater and by reacting the carbon dioxide reactant with seawater,
wherein the second reactor is a horizontal type reactor, and a turbulent flow zone and a laminar flow zone that are formed by seawater introduced with respect to a direction in which the carbon dioxide reactant is injected are sequentially formed in the second reactor.

17. The method of claim 16, wherein the carbon dioxide reactant comprises sodium carbonate (Na₂CO₃) or sodium bicarbonate (NaHCO₃).

18. The method of claim 16, wherein, the generating, by the first reactor, the carbon dioxide reactant by receiving the exhaust gas discharged from the ship and by reacting the exhaust gas with the basic alkaline mixture solution so that carbon dioxide in the exhaust gas is captured comprises:
collecting carbon dioxide in the exhaust gas by reacting the exhaust gas discharged from the ship with the basic alkaline mixture solution generated by mixing a basic alkaline solution supplied from a basic alkaline solution storage with water supplied from a water supply source in a ratio of 1:1 to 1:5.

19. The method of claim 16, wherein an average pH of the basic alkaline mixture solution is pH 12 to pH 13.5.

20. The method of claim 16, wherein the basic alkaline mixture solution comprises:
at least one oxide selected from a group consisting of SiO₂, Al₂O₃, Fe₂O₃, TiO₂, MgO, MnO, CaO, Na₂O, K₂O, and P₂O₃;
at least one metal selected from a group consisting of Li, Cr, Co, Ni, Cu, Zn, Ga, Sr, Cd, and Pb; and
at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

21. The method of claim 16, wherein the first reactor comprises:
a mixer configured to supply the basic alkaline mixture solution;
an absorption tower configured to capture carbon dioxide in the exhaust gas by reacting the basic alkaline mixture solution supplied from the mixer with the exhaust gas in which micro bubbles are formed by passing through a bubbler formed on a lower portion of the absorption tower;
a separator configured to collect a reactant containing carbon dioxide captured in the absorption tower and to separate the carbon dioxide reactant and a waster solution from the reactant;
a carbon resource storage unit storing the separated carbon dioxide reactant for utilizing the carbon dioxide reactant; and
a discharge part configured to discharge a residual exhaust gas in which carbon dioxide captured in the absorption tower is removed.

22. The method of claim 16, wherein, the generating, by the first reactor, the carbon dioxide reactant by receiving the exhaust gas discharged from the ship and by reacting the exhaust gas with the basic alkaline mixture solution so that carbon dioxide in the exhaust gas is captured comprises:
inputting the basic alkaline mixture solution by being adjusted through a valve in the mixer when a level of the basic alkaline mixture solution in the absorption tower is lowered to less than 90%, and stopping the inputting of the basic alkaline mixture solution and, at the same time, mixing the basic alkaline solution with water until a pH of the basic alkaline mixture solution becomes pH 12 to pH 13.5 when the level of the basic alkaline mixture solution becomes 100%.

23. The method of claim 16, wherein, in the providing, by the second reactor, carbonate minerals by introducing the carbon dioxide reactant generated in the first reactor and seawater and by reacting the carbon dioxide reactant with seawater,
the second reactor is horizontally arranged, and seawater introduced inside the second reactor is introduced in a tangential direction from two directions, thereby generating a tangential flow.

24. The method of claim 16, wherein the turbulent flow zone is a zone in which carbonate minerals are generated by reacting the carbon dioxide reactant with seawater, and the laminar flow zone is a zone in which particles of the generated carbonate minerals are grown.
